# EUROPÄISCHE PATENTSCHRIFT

(11) **EP 0 867 711 B1**
(45) Veröffentlichungstag und Bekanntmachung des Hinweises auf die Patenterteilung: **09.07.2003**
(21) Anmeldenummer: 98104556.0
(22) Anmeldetag: 13.03.1998
(51) Int. Cl.: G01N 21/51, G01N 21/47

(54) **Messgerät zur Bestimmung der statischen und/oder dynamischen Lichtstreuung**
Measuring apparatus for determining static and/or dynamic light scattering
Appareil de mesure pour la détermination de la dispersion de lumière statique et/ou dynamique

(30) Priorität: 28.03.1997 DE 19713200
(43) Veröffentlichungstag der Anmeldung: 30.09.1998
(73) Patentinhaber: ALV-Laser Vertriebsgesellschaft mbH, 63225 Langen (DE)
(72) Erfinder: Peters, Wilhelm, Ing.(grad.), 63225 Langen (DE)
(74) Vertreter: Meyer-Dulheuer, Karl-Hermann, Dr.

(56) Entgegenhaltungen:
- WO-A-96/33401
- DE-A- 3 813 718
- US-A- 4 710 642
- US-A- 5 129 723

## Beschreibung

Gegenstand der Erfindung ist ein Meßgerät zur Bestimmung der statischen und/oder dynamischen Lichtstreuung.

Die Messung der dynamischen und/oder statischen Lichtstreuung ermöglicht es, zum Beispiel die Partikelgröße, die Partikelgestaltung, die Diffusionskoeffizienten und die molaren Gewichte von gelösten Substanzen zu bestimmen. Dabei wird eine ein kohärentes Licht aussendende Lichtquelle und ein empfindlicher Einzelphotonendetektor eingesetzt, um die gesamte Lichtintensität (statische Lichtstreuung) und die Änderung der Lichtintensität in Abhängigkeit von Diffusionsvorgängen (dynamische Lichtstreuung) einer Probe in einer Lösung zu messen. Jede Änderung des Streuwinkels und damit des Wellenvektors des gestreuten Lichtes gibt zusätzliche Informationen sowohl bei Untersuchungen der statischen als auch der dynamischen Lichtstreuung. Die bei der statischen Lichtstreuung gemessenen Gesamtintensität des Streulichtes ist um so höher, je größer das Probenvolumen und je intensiver die Lichteinstrahlung ist. Bei der dynamischen Lichtstreuung vergleicht man die Änderungen der Lichtintensität des zu einem bestimmten Zeitpunkt von der Probe abgestrahlten kohärenten Streulichtes mit dem von der gleichen Probe zu einem anderen Zeitpunkt abgestrahlten Streulicht. Hierbei werden kleine Untersuchungsvolumina oder alternativ bei Verwendung von beliebigen Flüssigkeitsvolumina kohärentes Licht benötigt, um sicherzustellen, daß eine kohärente Mischung des Streulichtes stattfindet.

Von Meßgeräten zur Bestimmung der Lichtstreuung wird verlangt, daß sie sowohl die Messung der statischen als auch der dynamischen Lichtstreuung erlauben. Das aber ist nur möglich, wenn ein Kompromiß zwischen der Verwendung großer Untersuchungsvolumina bei der statischen Lichtstreuung und der Verwendung kleiner Untersuchungsvolumina bei der dynamischen Lichtstreuung gefunden wird.

Es ist deshalb auch schon daran gedacht worden, die statische und die dynamische Lichtstreuung nacheinander durchzuführen, wobei für jede Messung ein optimierter Detektor eingesetzt wird. Dieser Gedanke ist jedoch verworfen worden, weil bei nacheinanderfolgenden Messungen nicht mehr die gleiche Probe gemessen wird und sowohl die optischen als auch die Probenparameter nicht mehr gleich sind, sondern sich in der Zeit zwischen den aufeinanderfolgenden Messungen verändert haben. Augenfällige Beispiele hierfür sind einmal dynamische Veränderungen der Probe durch eine zwischen zwei Messungen eintretende Gelierung, Polymerisation oder Kristallisation und andererseits Proben mit einem hohen Maß an Heterogenität. In keinem dieser Fälle können bei aufeinanderfolgenden Messungen vergleichbare Ergebnisse erwartet werden.

In der US-Patentschrift 5,129,723 ist ein Verfahren beschrieben, bei dem in eine Hochdruckflüssigkeitschromatographiesäule eine Suspension injiziert wird, und die aus der Lichtstreuung erhältlichen Daten über das durchschnittliche Molekulargewicht, den durchschnittlichen Teilchendurchmesser und den zweiten virialen Koeffizienten gemessen und gesammelt werden können. Dabei muss die Suspension mit einer bestimmten Konzentration hergestellt und in den fließenden Strom des reinen Lösungsmittels gemäß dem üblichen Verfahren der Hochdruckflüssigkeitschromatographie injiziert werden. Die Probe wird dann in eine Mischkammer geführt, deren Volumen ein Mehrfaches des injizierten Volumens ausmacht. Nach dem Mischen wird die Probe einem Detektor für Streulicht zugeführt, wo für jede Eluatfraktion die Streuintensität als eine Funktion des Streuwinkels gemessen wird. Hieraus kann die Konzentration jeder Fraktion errechnet und die molekularen Parameter bestimmt werden.

Aus der US-Patentschrift 4,710,642 ist bereits ein Gerät zur Messung des Streulichts bekannt, bei dem mit einer Vielzahl von Detektoren die Mikrostruktur einer Probe über einen breiten Bereich der räumlichen Frequenz gemessen werden kann. Eine Reihe von Detektoren ist dabei senkrecht zur Ebene des einfallenden Laserstrahles und eines Spiegel-reflektierten Strahles angeordnet, um das zurück gestreute und das vorwärts gestreute Licht in der senkrechten Ebene zu erkennen. Zwei Laserstrahlen mit unterschiedlichen Wellenlängen können verwendet werden, um die optischen Eigenschaften einer Folie und des zugrunde liegenden Substrates zu erkennen.

Die Notwendigkeit winkelabhängige Messungen durchzuführen und damit den Wellenvektor zu ändern, zeigt eine andere Schwierigkeit: es muß nämlich sichergestellt sein, daß bei Betrachtung der Probe unter den verschiedensten Streuwinkeln stets das Streulicht des gleichen Probenvolumens gemessen wird, einerseits um der theoretischen Abhängigkeit des daraus wirksamen Streuvolumens zu entsprechen und eine spätere Korrektur zu ermöglichen und andererseits, um zu verhindern, daß kleine Inhomogenitäten in der Probe zu völlig unerwarteten Ergebnissen führen. Um dies sicherzustellen wird normalerweise ein goniometrisches Verfahren durchgeführt. Dabei wird die Probe justiert, so daß sie genau im Rotationszentrum eines Drehtisches mit einem Dreharm steht, der einen Detektor trägt. Das Laserlicht wird ebenfalls auf die Probe im Rotationszentrum justiert. Damit ist sichergestellt, daß das gleiche Streuvolumen im gesamten Streuwinkelbereich untersucht wird, solange die geforderte Justierung in allen Achsen präzise ist, also sowohl in horizontaler und vertikaler Richtung, als auch in den Neigungen und den Winkelabweichungen des Detektors und des Laserstrahls.

Obwohl diese Justierungen üblicherweise sehr exakt sein müssen und eine Genauigkeit unter 10 µm für die meisten Parameter erfordern, können sie durchgeführt werden, wenn der Detektor in die Nullgrad-Streuwinkelposition gebracht wird, wo er direkt von dem Laserstrahl getroffen wird. Die Verfahrensschritte für die Ausrichtung einer handelsüblichen Vorrichtung zur Messung von Streulicht sind bekannt.

Allerdings ist bei vielen Proben die gleichzeitige Messung der statischen und dynamischen Lichtstreuung durch aufeinanderfolgende Messungen aus vielen Streuwinkeln problematisch. Entweder wegen Instabilitäten der Probe, die durch Gelierung, Polymerisation und/oder Kristallisation hervorgerufen werden können, oder wegen anderer Einschränkungen der für jede Probe zur Verfügung stehenden Meßzeit werden bei aufeinanderfolgenden Messungen nicht immer gute Ergebnisse erzielt. Trotzdem gibt es auch Standardmessungen, bei denen die statische und dynamische Lichtstreuung nacheinander aus verschiedenen Streuwinkeln durchgeführt werden, zum Beispiel bei der Messung der Partikelgröße, ohne daß es hierbei zu einer Beeinträchtigung der Meßergebnisse zu kommen braucht.

Zur Überwindung dieser Schwierigkeiten kann die gleichzeitige Beobachtung des Streulichtes durch eine Vielzahl von Detektoren aus unterschiedlichen Blickwinkeln ein Ausweg sein (vgl. DE 38 13 718 A1). Das scheitert jedoch daran, daß es ohne einen extremen Aufwand nicht möglich ist, eine Vielzahl von Detektoren so zu justieren, daß jeder Detektor Streulicht aus dem gleichen Streuvolumen empfängt. Außerdem ist bei der Aufstellung einer Vielzahl von Detektoren um die zu untersuchende Probe herum, die Zahl der für die Messung zur Verfügung stehenden Streuwinkel begrenzt durch die Anzahl der eingesetzten Detektoren.

Es stellte sich deshalb die Aufgabe, ein Meßgerät zur Bestimmung der statischen oder der dynamischen Lichtstreuung zu entwickeln, das die gleichzeitige Messung des Streulichtes aus einer Vielzahl von Streuwinkeln ermöglicht und gleichzeitig eine einfache, aber trotzdem exakte Justierung der eingesetzten Detektoren ermöglicht.

Gelöst wird diese Aufgabe durch ein Meßgerät mit den Merkmalen von Anspruch 1.

Die auf dem Drehtisch angeordneten Detektoren können mit Hilfe des Laserstrahles und des Drehtisches in ihrer jeweiligen Nullgrad-Position so justiert werden, daß alle Detektoren auf einen gemeinsamen Punkt im Rotationszentrum ausgerichtet sind. Mit Hilfe des Drehtisches kann der Betrachtungswinkel der Detektoren um jeden beliebigen Winkelbetrag unter Beibehaltung der Justierung der Detektoren auf einen gemeinsamen Punkt im Rotationszentrum verstellt werden. Vorteilhafterweise können auf einem Drehtisch bis zu 30, vorzugsweise 4 bis 16 Detektoren befestigt werden, die auf dem Drehtisch in einem Winkelabstand von 5 bis 30°, vorzugsweise 10 bis 20° angeordnet sind.

Im allgemeinen sind für Messungen des statischen oder dynamischen Streulichtes nicht mehr als 10 bis 20 Messungen aus unterschiedlichen Winkeln erforderlich, obwohl in Sonderfällen auch Messungen aus bis zu 100 unterschiedlichen Streuwinkeln (Lorenz-Mie Streuanalyse) durchgeführt werden. Das erfindungsgemäße Messgerät gestattet durch eine stufenweise Veränderung der Winkelposition des Drehtisches die Anzahl der für Messungen zur Verfügung stehenden Streuwinkel beliebig zu erhöhen.

Für das erfindungsgemäße Messgerät können beliebige, zur Messung des Streulichtes geeignete Detektoren eingesetzt werden. Sowohl die üblichen Lochblendendetektoren als auch die Faserdetektoren, die eine Kombination einer Gradientenindexlinse mit einer optischen Faser unterschiedlichen Faserdurchmessers und numerischer Apertur aufweisen, können eingesetzt werden.

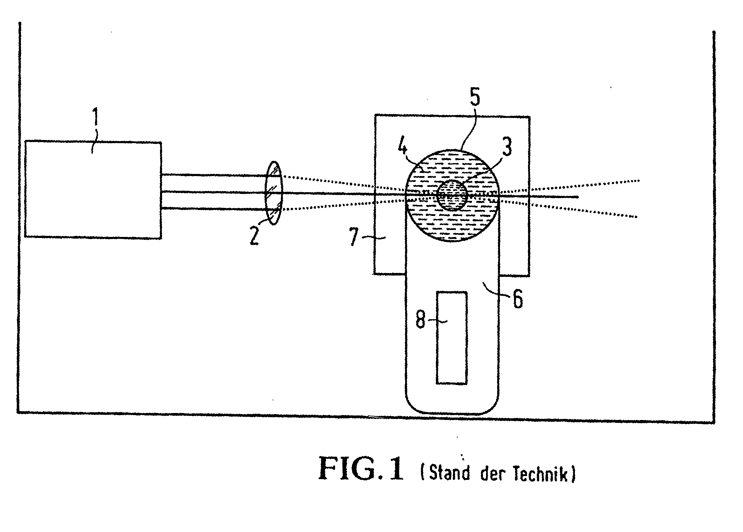

Goniometrische Messinstrumente, mit denen der Streuwinkel oder der mit ihm äquivalente Wellenvektor geändert werden können, werden für die Messungen des dynamischen oder statischen Streulichtes seit langem eingesetzt. Der typische Aufbau eines derartigen Goniometers ist in Fig. 1 dargestellt. Sie zeigt eine Laserlichtquelle 1, eine Fokussiervorrichtung 2, einen Probenhalter mit Küvette und Probe 3, der umgeben ist von einer Flüssigkeit 4, die den gleichen Brechungsindex wie das Küvettenglas aufweist und in einem Gefäß 5 enthalten ist, das aus einem durchsichtigen Material mit dem gleichen Brechungsindex des Küvettenglases besteht. Ein zur Messung des Streulichtes geeigneter Detektor 8 befindet sich auf einem Dreharm 6 und ist seinerseits auf einem Drehtisch 7 befestigt.

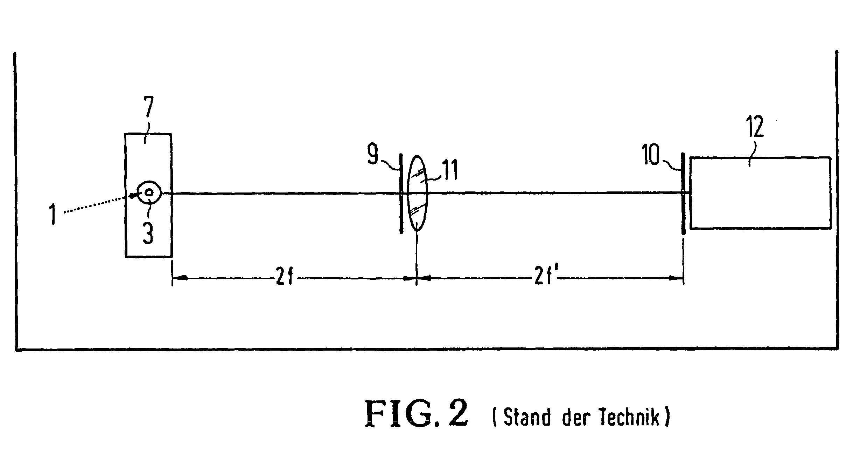

Der Detektor kann ein Lochblendendetektor sein, wie er in Fig. 2 dargestellt ist. Er enthält eine erste Lochblende 9 mit einem definierten Lochdurchmesser, die nahe der Sammellinse 11 und im Abstand der doppelten Brennweite vom Streuzentrum steht sowie eine zweite Lochblende 10 mit etwa dem gleichen Lochdurchmesser wie die erste Lochblende, die ebenfalls im Abstand der zweifachen Brennweite von der Sammellinse steht. Als Einzelphotonendetektor 12 wird entweder ein Photomultiplier oder eine entsprechende Photodiode eingesetzt.

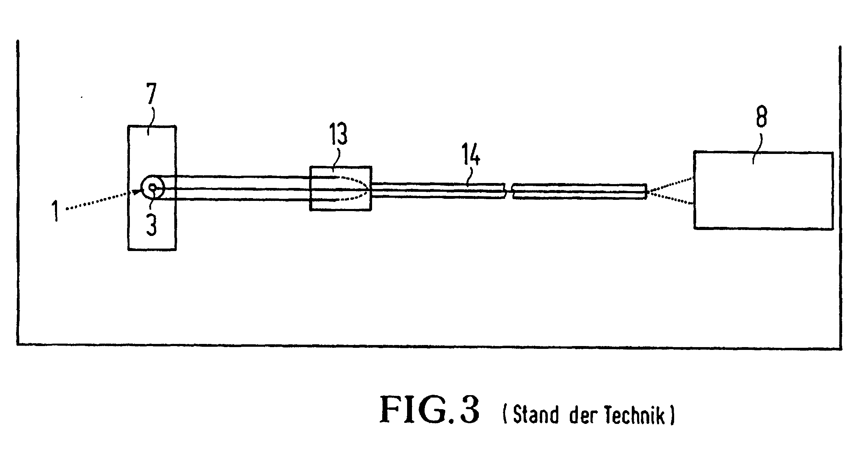

Der in Fig. 3 dargestellte Faserdetektor besteht aus einer Gradientenindexlinse 13 und einer opischen Faser 14 mit einer kleinen numerischen Apertur (numerische Apertur 0,1 bis 0,2) und einem geringen Kerndurchmesser (5 bis 25 µm). Die Entfernung vom Streuzentrum ist beliebig, beträgt aber im allgemeinen wenigstens 10 mm. Das Licht wird von der Gradientenindexlinse 13 gesammelt und in der optischen Faser zum Detektor 8 geführt.

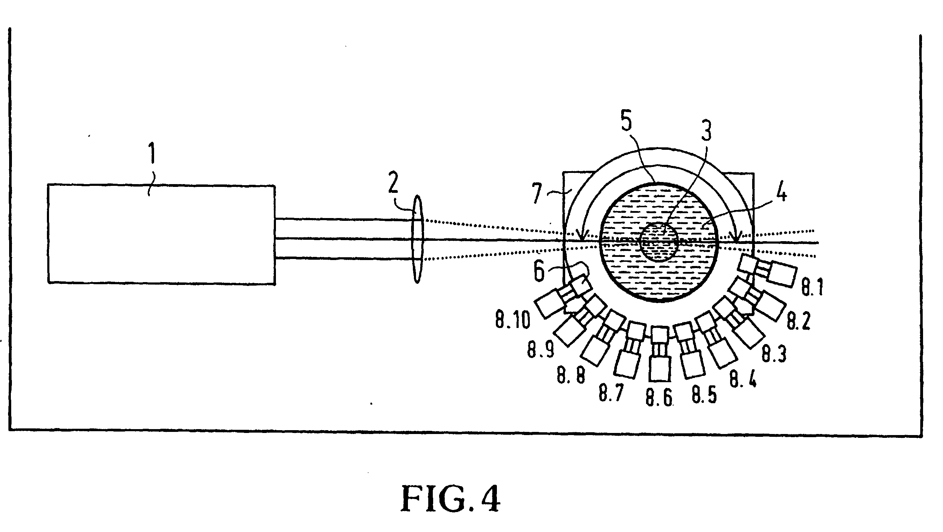

In Fig. 4 ist das erfindungsgemäße Meßgerät dargestellt. Es zeigt eine Laserlichtquelle 1, eine Fokussiereinrichtung 2 und einen Probenhalter mit Küvette und Probe 3, der umgeben ist von einer Flüssigkeit 4 mit dem Brechnungsindex des Küvettenglases, die sich in einem Gefäß 5 aus einem durchsichtigen Material befindet, das ebenfalls den Brechnungsindex des Küvettenglases aufweist. Eine Vielzahl von Detektoren (8.1 bis 8.10), die jeweils eine Justiereinrichtung aufweisen, befinden sich auf den Dreharmen 6 des Drehtisches 7, die in diesem Fall in Winkelabständen von 15° angeordnet sind. Die Detektoren können entweder Lochblendendetektoren oder Faserdetektoren sein.

### Bezugszeichenliste:

- 1: Laserlichtquelle
- 2: Fokussiereinrichtung
- 3: Probenhalter mit Küvette und Probe
- 4: Flüssigkeit mit Brechnungsindex des Küvettenglases
- 5: Gefäß aus einem durchsichtigen Material mit einem Brechungsindex des Küvettenglases
- 6: Dreharm
- 7: Drehtisch
- 8: Detektor
- 9: 1. Lochblende
- 10: 2. Lochblende
- 11: Sammellinse
- 12: Einzelphotonendetektor
- 13: Gradientenindexlinse
- 14: optische Faser

## Patentansprüche

1. Messgerät zur Bestimmung der statischen und/oder dynamischen Lichtstreuung, welches eine Lichtquelle (1) zur Erzeugung eines Laserstrahles aufweist, die eine in einer zylindrischen Küvette enthaltene Probe (3) beleuchtet, wobei die Probe im Zentrum eines Drehtisches (7) koaxial zu dessen Rotationsachse und orthogonal zum Laserstrahl angeordnet ist, wobei auf dem Drehtisch eine Vielzahl von Detektoren (8.1 - 8.10) in beliebigen Winkelabständen nebeneinander angeordnet sind, und jeder Detektor eine Justiereinrichtung aufweist, mit der die auf dem Drehtisch angeordneten Detektoren mit Hilfe des Laserstrahles in ihrer jeweiligen Nullgrad-Position, wo sie vom Laserstrahl direkt getroffen werden, so justierbar sind, dass nach der Justage alle Detektoren auf einen gemeinsamen Punkt in der Probe ausgerichtet sind.

2. Meßgerät nach Anspruch 1, **dadurch gekennzeichnet, daß** es mit einer Fokusiervorrichtung ausgerüstet ist, die den Laserstrahl auf die in der Küvette enthaltene Probe fokussiert.

3. Meßgerät nach Anspruch 1 oder 2, **dadurch gekennzeichnet, daß** auf dem Drehtisch bis zu 30, vorzugsweise 4 bis 16 Detektoren befestigt sind.

4. Meßgerät nach einem der Ansprüche 1 bis 3, **dadurch gekennzeichnet, daß** die Detektoren auf dem Drehtisch in einem winkelabstand von 5 bis 30°, vorzugsweise 10 bis 20° angeordnet sind.

## Claims

1. Measuring apparatus for determining static and/or dynamic light scattering, which has a light source (1) for generating a laser beam which eliminates a sample (3) contained in a cylindrical cuvette, the sample being arranged at the centre of a rotary table (7) coaxially with the axis of rotation thereof and orthogonally to the laser beam, there being arranged on the rotary table a multiplicity of detectors (8.1 - 8.10) at arbitrary angular spacings next to one another, and each detector having an adjusting device by which the detectors arranged on the rotary table can have their respective zero degree position, where they are directly hit by the laser beam, adjusted with the aid of the laser beam such that after the adjustment all the detectors are aligned with a common point in the sample.

2. Measuring apparatus according to Claim 1, **characterized in that** it is equipped with a focusing system which focuses the laser beam onto the sample contained in the cuvette.

3. Measuring apparatus according to Claim 1 or 2, **characterized in that** up to 30, preferably 4 to 16, detectors are fastened on the rotary table.

4. Measuring apparatus according to one of Claims 1 to 3, **characterized in that** the detectors are arranged on the rotary table at an angular spacing of 5 to 30°, preferably 10 to 20°.

## Revendications

1. Appareil de mesure pour la détermination de la dispersion de la lumière statique et/ou dynamique, qui présente une source de lumière (1) destinée à produire un faisceau laser qui éclaire une sonde (3) contenue dans une cuvette cylindrique, la sonde étant disposée au centre d'une table tournante (7) coaxialement à son axe de rotation et perpendiculairement au faisceau laser, une pluralité de détecteurs (8.1 - 8.10) étant disposés les uns à côté des autres à des intervalles angulaires quelconques sur la table tournante, et chaque détecteur présentant un dispositif d'ajustage avec lequel les détecteurs disposés sur la table tournante peuvent être ajustés à l'aide du faisceau laser dans leur position zéro respective, où ils sont frappés directement par le faisceau laser, de telle sorte qu'après l'ajustage, tous les détecteurs soient orientés sur un point commun dans la sonde.

2. Appareil de mesure selon la revendication 1, **caractérisé en ce qu'**il est équippé d'un dispositif de focalisation qui focalise le faisceau laser sur la sonde contenue dans la cuvette.

3. Appareil de mesure selon la revendication 1 ou 2, **caractérisé en ce que** jusqu'à 30, de préférence de 4 à 16 détecteurs sont fixés sur la table tournante.

4. Appareil de mesure selon l'une quelconque des revendications 1 à 3, **caractérisé en ce que** les détecteurs sont disposés sur la table tournante suivant un intervalle angulaire de 5 à 30°, de préférence de 10 à 20°.
